# EUROPÄISCHE PATENTSCHRIFT

(11) **EP 2 478 254 B1**
(45) Veröffentlichungstag und Bekanntmachung des Hinweises auf die Patenterteilung: **12.03.2014**
(21) Anmeldenummer: 10752790.5
(22) Anmeldetag: 07.09.2010
(51) Int. Cl.: F16F 1/38

(54) **ELASTISCHE BUCHSE, INSBESONDERE VERBUNDLENKER-BUCHSE**
ELASTIC BUSHING, IN PARTICULAR COMPOSITE STEERING BUSHING
MANCHON ÉLASTIQUE, EN PARTICULIER MANCHON DE BRAS OSCILLANT COMBINÉ

(30) Priorität: 15.09.2009 DE 102009041549
(43) Veröffentlichungstag der Anmeldung: 25.07.2012
(73) Patentinhaber: Trelleborg Automotive Germany GmbH, 64747 Breuberg (DE)
(72) Erfinder: KIEFFER, Jérôme, F-44300 Nantes (FR)
(74) Vertreter: Preissner, Nicolaus
(86) Internationale Anmeldenummer: PCT/EP2010/063088
(87) Internationale Veröffentlichungsnummer: WO 2011/032858

(56) Entgegenhaltungen:
- DE-A1- 3 004 075
- DE-A1- 19 638 554
- DE-A1-102007 016 226

## Beschreibung

Die vorliegende Erfindung betrifft eine elastische Buchse, insbesondere Verbundlenker-Buchse mit einem inneren Kern und einer Außenhülse, die konzentrisch zueinander angeordnet sind, und durch eine Elastomerschicht miteinander verbunden sind, wobei zwischen dem inneren Kern und der Außenhülse ein Begrenzungselement angeordnet ist, das die radiale Bewegung des inneren Kerns begrenzt, wobei die Außenhülse einen nach innen gebogenen Endbereich aufweist, wobei das Begrenzungselement in Axialrichtung zu dem Endbereich beabstandet ist und wobei der Endbereich die axiale Bewegung des inneren Kerns begrenzt. Des Weiteren betrifft die Erfindung ein Verfahren zur Herstellung der elastischen Buchse.

Derartige Buchsen werden im Automobilbau zur Lagerung von Verbundlenkerachsen verwendet. Hierzu werden die Buchsen in ein Aufnahmeauge eingepresst und mittels eines Bolzens an einem an der Fahrzeugkarosserie verbundenen Halter fixiert. Um ein gutes Handling und Fahrverhalten zu erzielen, bedarf es eines definierten Spiels der Buchse in Radialrichtung und Axialrichtung.

Aus der DE 196 38 554 A1 geht ein elastisches Lager hervor, das einen inneren Kern und eine Außenhülse aufweist, die konzentrisch zueinander angeordnet sind. Zwischen dem inneren Kern und der Außenhülse ist eine Elastomerschicht eingebracht. Die Außenhülse ist an ihren Enden zur Bildung eines Flansches umgebogen. Jeweils endseitig ist zwischen der Elastomerschicht und dem Flansch ein Begrenzungselement eingebracht, das an der Innenfläche der Außenhülse anliegt. Zwischen dem Begrenzungselement und dem inneren Kern ist ein Freiraum vorhanden, so dass ein Spiel in radialer Richtung vorhanden ist. Jedoch weist das elastische Lager kein Spiel in Axialrichtung auf, so dass diese Aufgabe ein Halter übernehmen muss, mittels dessen die Buchse mit der Fahrzeugkarosserie verbunden ist. Folglich weist die Buchse den Nachteil auf, dass für ein Spiel in Axialrichtung ein teurer Halter erforderlich ist.

Aus der DE 30 04 075 A1 geht ein elastisches Gelenk hervor, das einen inneren Kern und eine metallische Außenhülse aufweist, wobei der innere Kern und die Außenhülse konzentrisch zueinander angeordnet sind. Zwischen dem inneren Kern und der Außenhülse ist ein Elastomerkörper eingebracht. Zur axialen Festlegung der Außenhülse an dem Elastomerkörper sind jeweils stirnseitig zwei Metallringe an dem Elastomerkörper angebracht, die eine Reibungshaftung mit der Außenhülse herstellen. Zur Erhöhung der Reibungshaftung ist in dem Elastomerkörper ein Metalldrahtgewebe eingebracht. Zur Erzeugung eines radialen Spiels ist zwischen den Flanschen und dem inneren Kern ein Freiraum vorhanden. Ebenfalls weist diese Buchse kein Spiel in Axialrichtung auf, so dass diese Aufgabe ein teurer Halter übernehmen muss.

In DE 10 2007 016226 A1 ist eine elastischen Buchse offenbart, die einen inneren Kern und eine Außenhülse mit nach innen gebogenen Endbereichen aufweist, wobei der innere Kern und die Außenhülse konzentrisch zueinander angeordnet sind. Ferner befindet sich zwischen dem inneren Kern und der Außenhülse ein Elastomerkörper. Des Weiteren weist die Buchse zwei Axiallager auf, die zwischen dem inneren Kern und den nach innen gebogenen Endbereichen angeordnet sind. Jedes der Axiallager umfasst äußere und innere Lagerelemente, zwischen denen zwei durch eine Zwischenscheibe getrennte Elastomerkörper angeordnet sind.

Aus DE 196 38 554 A1 geht eine elastische Buchse hervor, die einen inneren Kern und eine Außenhülse, die durch eine Elastomerschicht miteinander verbunden sind, umfasst. Die Außenhülse weist jeweils endseitig nach innen gebogene Endbereiche auf, wobei zwischen den gebogenen Endbereichen und dem Elastomerkörper jeweils ein Stützring angeordnet ist.

In DE 30 04 075 A1 ist eine elastische Buchse offenbart, die einen inneren Kern, eine Außenhülse und einen die Außenhülse und den inneren Kern miteinander verbindenden Elastomerkörper aufweist. Die Außenhülse umfasst jeweils endseitig einen nach innen gebogenen Endbereich, wobei zwischen dem Elastomerkörper und dem gebogenen Endbereich ein ringförmiges Teil angeordnet ist.

Die **Aufgabe** der Erfindung besteht darin, eine elastische Buchse der eingangs genannten Art anzugeben, die kostengünstig in der Herstellung ist und gleichzeitig ein Spiel in axialer und radialer Richtung bereitstellt.

Zur **Lösung** dieser Aufgabe wird bei einer Buchse der eingangs genannten Art vorgeschlagen, dass der innere Kern wenigstens eine in Axialrichtung eingeformte Ausnehmung aufweist, dass das wenigstens eine Begrenzungselement formschlüssig in die Ausnehmung eingebracht ist und dass der Endbereich als Anschlag für das Begrenzungselement in axialer Richtung dient. Infolge der axialen Beabstandung des Begrenzungselements zu dem Endbereich und der radialen Beabstandung des Begrenzungselements zu der Außenhülse weist die erfindungsgemäße elastische Buchse ein Spiel in axialer und radialer Richtung auf. Hierdurch sind separate Teile, die diese Funktion übernehmen, entbehrlich. Folglich stellt das erfindungsgemäße Lager eine kostengünstigere Lösung als bisherige elastische Lager dar. Zudem gewährleisten die Ausnehmungen in dem Kern eine formschlüssige Aufnahme der Begrenzungselemente, so dass die Begrenzungselemente während der Montage der elastischen Buchse eine vorteilhafte Fixierung an dem inneren Kern erfahren und somit nicht verrutschen. Zudem weist das erfindungsgemäße elastische Lager eine kompakte Bauweise auf.

Vorteilhafterweise ist jeweils ein Begrenzungselement an den gegenüberliegenden Stirnseiten des inneren Kerns angeordnet. Somit weist die Buchse ein Spiel in alle Raumrichtungen auf.

In einer weiteren vorteilhaften Ausgestaltung weist der innere Kern vier von einer Stirnseite zur anderen Stirnseite in Axialrichtung durchgehende Ausnehmungen auf, wobei die Ausnehmungen annähernd in einem Winkel von 90° zueinander angeordnet sind.

Das Begrenzungselement weist vorteilhaft vier Stege auf, die formschlüssig in die Ausnehmung des Kerns einführbar sind. Hierdurch wird eine exakte Positionierung des Begrenzungselements an dem inneren Kern sichergestellt.

Vorteühaft ist an dem inneren Kern ein Absatz vorgesehen, in dem ein korrespondierender ringförmiger Absatz des Begrenzungselements eingreift. Infolgedessen wird das Begrenzungselement nach dem Aufsetzen derart an dem inneren Kern fixiert, dass kein radiales Verschieben mehr möglich ist, so dass während des Umbiegevorgangs der Endbereiche der Außenhülse eine einfache Handhabung der elastischen Buchse sichergestellt ist. Zudem dienen die beiden Absätze als Anschlag für das Begrenzungselement beim Einsetzen in den inneren Kern.

In einer weiteren vorteilhaften Ausgestaltung ist zwischen dem Begrenzungselement und der Elastomerschicht ein Freiraum in axialer und/oder radialer Richtung vorhanden. Hierdurch kann eine progressive Begrenzung erreicht werden, da das Begrenzungselement bei einer axialen oder radialen oder axialen und radialen Bewegung zunächst gegen die Elastomerschicht stößt und entsprechend der Dicke dieser Schicht und ihren Materialeigenschaften eine entsprechende Dämpfung erfährt. Folglich kann das Fahrverhalten nicht nur über das in axialer und radialer Richtung vorhandene Spiel, sondern auch mit Hilfe der zwischen dem Begrenzungselement und der Außenhülse beziehungsweise dem Endbereich vorhandenen Elastomerschicht eingestellt werden.

In dem Kern ist vorteilhaft eine Öffnung eingebracht, in die eine Flachstange einpressbar ist. Mittels der Flachstange kann die elastische Buchse beispielsweise an der Fahrzeugkarosserie befestigt werden.

Vorteilhafterweise ist der innere Kern aus einem abgelängten Strangpressprofil, insbesondere aus Aluminium, hergestellt. Somit weist die elastische Buchse ein geringes Gesamtgewicht auf.

In einer weiteren vorteilhaften Ausgestaltung ist das Begrenzungselement aus Kunststoff hergestellt. Hierdurch wird ein kostengünstiges Element zur Begrenzung geschaffen.

Zudem betrifft die Erfindung ein Verfahren zur Herstellung einer elastischen Buchse, das die folgenden Schritte umfasst. Zuerst werden ein innerer Kern und eine Außenhülse stranggepresst. Anschließend wird zwischen dem inneren Kern und der Außenhülse eine Elastomerschicht eingebracht und vulkanisiert. Danach werden zwei Begrenzungselemente an jeweils einer Stirnseite des inneren Kerns angebracht, wobei Stege der Begrenzungselemente in Ausnehmungen des inneren Kerns eingeführt werden. Anschließend wird die Außenhülse an ihren gegenüberliegenden Enden umgebogen.

Nachfolgend wird die Erfindung anhand eines Ausführungsbeispiel näher erläutert, das in den Zeichnungen schematisch dargestellt ist. Hierbei zeigen:
- Fig. 1: eine perspektivische teilgeschnittene Ansicht des erfindungsgemäßen Lagers;
- Fig. 2: einen Querschnitt durch das erfindungsgemäße Lager entlang der Linie II-II in Fig. 1;
- Fig. 3: einen Horizontalschnitt durch das erfindungsgemäße Lager direkt nach dem Herstellungsschritt der Vulkanisation;
- Fig. 4: einen Horizontalschnitt durch das erfindungsgemäße Lager ohne Flachstange entlang der Linie IV-IV in Fig. 1 und
- Fig. 5: eine perspektivische Ansicht der einzelnen Elemente des erfindungsgemäßen Lagers.

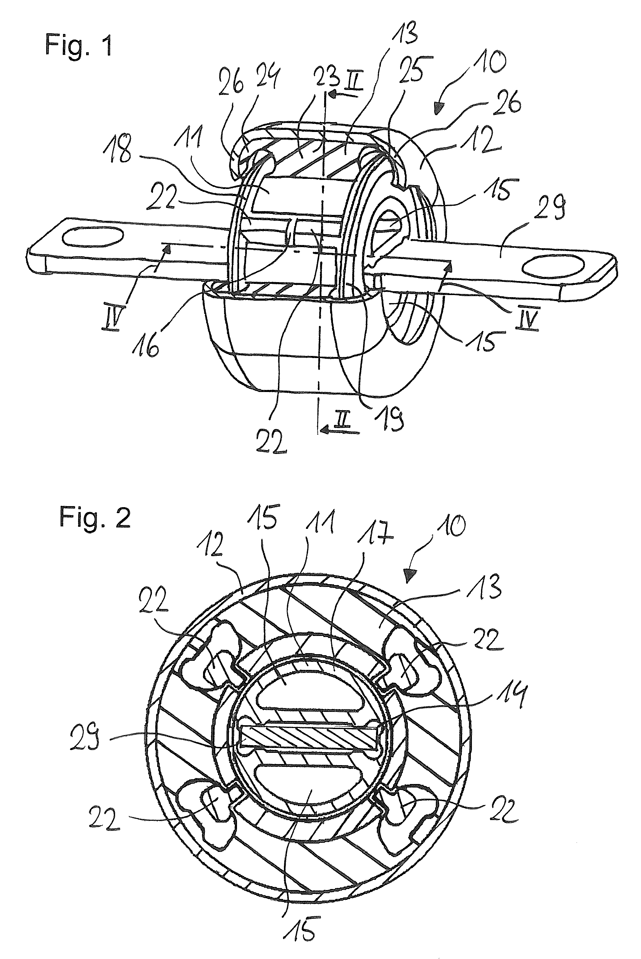

Fig. 1 zeigt eine elastische Buchse 10 für eine Verbundlenkerhinterachse. Die Buchse 10 weist einen inneren Kern 11 und eine Außenhülse 12 auf. Der innere Kern 11 und die Außenhülse 12 sind konzentrisch zueinander angeordnet und mittels einer zwischen den beiden Hülsen 11, 12 eingebrachten Elastomerschicht 13 miteinander verbunden.

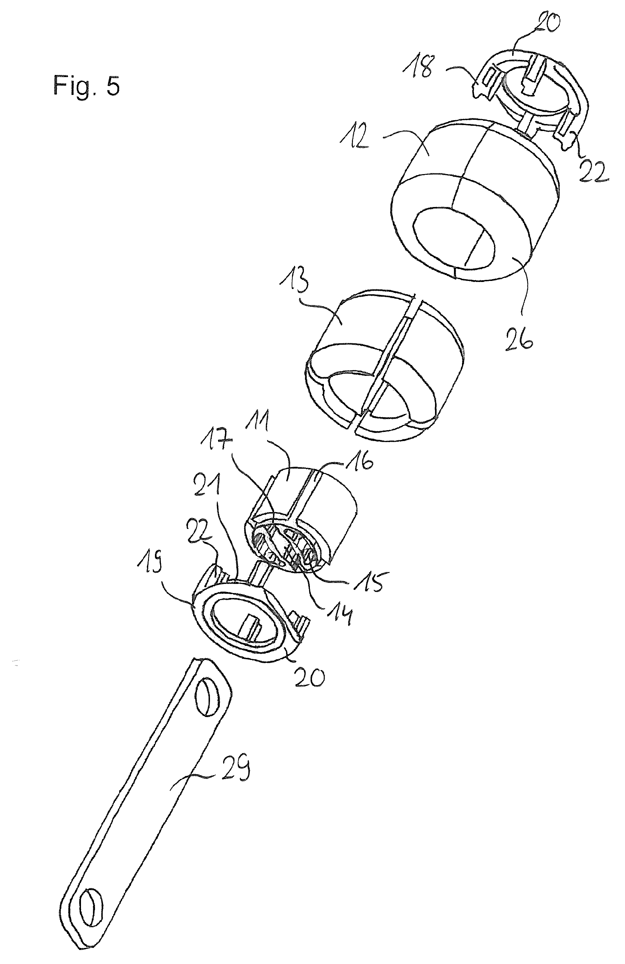

Gemäß den Fig. 1 bis 5 weist der innere Kern 11 eine Durchgangsöffnung 14 und zwei parallel zu der Durchgangsöffnung 14 angeordnete Öffnungen 15, die wie die Durchgangsöffnung 14 von einer Stirnseite zur anderen Stirnseite des inneren Kerns 11 durchgehend ausgebildet sind, auf. Wie in Fig. 5 dargestellt ist, sind in dem inneren Kern 11 vier Ausnehmungen 16 eingebracht, die in Axialrichtung durchgehend von einer Stirnseite des inneren Kerns 11 zu der anderen Stirnseite verlaufen und annähernd in einem Winkel von 90° zueinander angeordnet sind. Des Weiteren weist der innere Kern 11 einen Absatz 17 auf.

Wie in Fig. 1 dargestellt ist, umfasst die elastische Buchse 10 ein erstes Begrenzungselement 18 und ein zweites Begrenzungselement 19. Gemäß Fig. 5 weisen die Begrenzungselemente 18, 19 einen ringförmigen Abschnitt 20, der einen ringförmigen Absatz 21 aufweist, und vier von dem ringförmigen Abschnitt 20 abragende näherungsweise T-förmige Stege 22 auf. Die Begrenzungselemente 18, 19 sind aus Kunststoff hergestellt.

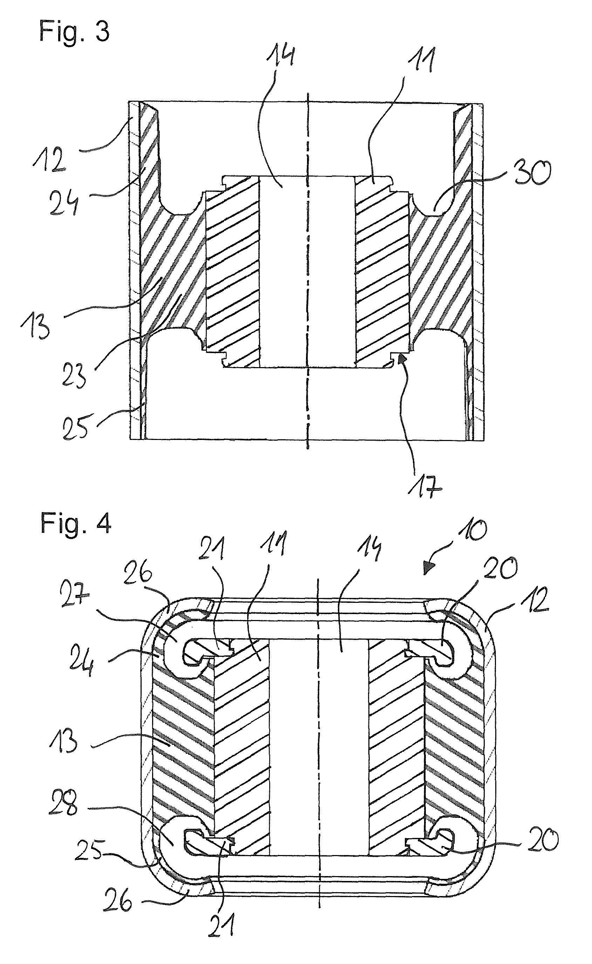

Gemäß den Fig. 2 und 3 ist die Außenhülse 12 als dünnwandiges Rohr ausgebildet, wobei die Außenhülse 12 länger als der innere Kern 11 ist.

Zur Herstellung der Buchse 10 wird zunächst der innere Kern 11 stranggepresst und entsprechend der gewünschten Länge abgelängt. Ebenso wird die Außenhülse 12 stranggepresst und entsprechend der gewünschten Länge abgelängt. Sowohl der innere Kern 11 als auch die Außenhülse 12 sind aus einem metallischem Werkstoff, insbesondere Aluminium, hergestellt. Anschließend werden der innere Kern 11 und die Außenhülse 12 derart in eine Vulkanisationsform eingelegt, dass sie konzentrisch zueinander angeordnet sind. Danach wird eine Elastomerschicht 13 eingespritzt, wobei die Ausnehmungen 16 frei von der Elastomerschicht 13 gehalten werden, und schließlich vulkanisiert, so dass ein Stoffschluss der Elastomerschicht 13 mit dem inneren Kern 11 und der Außenhülse 12 erfolgt. Wie aus Fig. 3 hervorgeht, umfasst die Elastomerschicht 13 einen ersten Abschnitt 23, einen zweiten Abschnitt 24 und einen dritten Abschnitt 25. Der erste Abschnitt 23 verbindet den inneren Kern 11 mit der Außenhülse 12 und weist zwei umlaufende Einkerbungen 30 auf. Der zweite Abschnitt 24 und der dritte Abschnitt 25 erstrecken sich in entgegengesetzter Richtung weg von dem ersten Abschnitt 23 in Richtung der Stirnseiten der Außenhülse 12, wobei sie entlang der Innenseite der Außenhülse 12 verlaufen. Der zweite Abschnitt 24 ist dicker als der dritte Abschnitt 25 ausgeprägt. Es ist jedoch auch denkbar, dass der dritte Abschnitt 25 dicker als der zweite Abschnitt 24 ausgebildet ist. Des Weiteren wäre es auch denkbar, dass die beiden Abschnitte 24, 25 gleich stark ausgebildet sind.

Gemäß den Fig. 4 und 5 werden nach der Vulkanisation der Elastomerschicht 13 die Begrenzungselemente 18, 19 jeweils an den Stirnseiten des inneren Kerns 11 angebracht. Hierzu werden die Stege 22 der Begrenzungselemente 18, 19 in die Ausnehmungen 16 eingeschoben, wobei die Stege 22 formschlüssig von den Ausnehmungen 16 aufgenommen werden, wie dies in Fig. 2 dargestellt ist. Zusätzlich greift der ringförmige Absatz 21 des ringförmigen Abschnitts 20 in den Absatz 17 des inneren Kerns 11 ein, so dass die Begrenzungselemente 18, 19 radial fixiert sind.

Nach dem Anbringen der Begrenzungselemente 18, 19 an den jeweiligen Stirnseiten des inneren Kerns 11 wird jeweils das Ende der Außenhülse 12 nach innen in etwa senkrecht in Richtung des inneren Kerns 11 zu einem Endbereich 26 umgebogen. Wie in den Fig. 2 und 4 dargestellt, wird hierdurch zwischen dem ersten Begrenzungselement 18, der Außenhülse 12 und dem Endbereich 26 beziehungsweise zwischen dem ersten Begrenzungselement 18 und dem zweiten Abschnitt 24 ein erster Freiraum 27 gebildet. Zwischen dem zweiten Begrenzungselement 19, der Außenhülse 12 und dem Endbereich 26 beziehungsweise dem zweiten Begrenzungselement 19 und dem dritten Abschnitt 25 wird ein zweiter Freiraum 28 gebildet. Die Größe der Freiräume 27, 28 ist abhängig von der Dicke des ersten Abschnitts 24 und des zweiten Abschnitts 25. Wie in Fig. 2 dargestellt, sind zwischen den Stegen 22 und der Elastomerschicht 13 ebenfalls Freiräume ausgebildet. Die beiden Freiräume 27, 28 sowie die Freiräume zwischen den Stegen 22 und der Elastomerschicht 13 ermöglichen jeweils eine Bewegung des inneren Kerns 11 in radialer oder axialer Richtung oder eine kombinierte Bewegung in radialer und axialer Richtung des inneren Kerns 11.

Gemäß Fig. 4 dient der Endbereich 26 als Anschlag für das Begrenzungselement 18, 19 in axialer Richtung. Als Anschlag in radialer Richtung dient die Außenhülse 12. Infolge der sich zwischen den Begrenzungselementen 18, 19 und der Außenhülse 12 beziehungsweise dem Endbereich 26 befindlichen Elastomerschicht, die durch die Abschnitte 24, 25 gebildet wird, kann eine progressive Begrenzung bei Anschlag der Begrenzungselemente 18, 19 an die Abschnitte 24, 25 eingestellt werden. Je nach Dicke der Abschnitte 24, 25 sowie je nach Materialeisgenschaften können unterschiedliche Steifigkeiten erzielt werden.

Zur Festlegung der Buchse 10 an einer nicht näher dargestellten Fahrzeugkarosserie wird eine Flachstange 29 in die Durchgangsöffnung 14 eingepresst, wie in den Fig. 1 und 5 dargestellt ist, wobei die Flachstange 29 mittels ihrer in den Figuren 1 und 5 dargestellten Öffnungen mit der Fahrzeugkarosserie verbunden wird. Die elastische Buchse 10 wird in ein Aufnahmeauge eingepresst.

Die elastische Buchse 10 zeichnet sich durch ihr Spiel in axialer und radialer Richtung aus, wobei hierzu keine teuren und aufwendig herzustellenden separaten Teile erforderlich sind. Dies wird einerseits durch die Begrenzungselemente 18, 19 sowie andererseits durch die Außenhülse 12 und die umgebogenen Endbereiche 26 der Außenhülse 12 ermöglicht. Infolge der Elastomerschicht 13 zwischen den Begrenzungselementen 18, 19 und der Außenhülse 12 beziehungsweise den Endbereichen 26 kann zusätzlich eine progressive Begrenzung während des Anschlags der Begrenzungselemente 18, 19 eingestellt werden, so dass hierüber die Fahreigenschaften zusätzlich beeinflusst werden können. Des Weiteren zeichnet sich die elastische Buchse durch ihre kompakte Bauweise und ihre kostengünstige Herstellung aus. Zudem ermöglichen die Ausnehmungen 16 in dem inneren Kern 11 eine exakte Positionierung der Begrenzungselemente 18, 19 an dem inneren Kern 11 und eine einfache Handhabung derselben während der Montage.

### Bezugszeichenliste

- 10: elastische Buchse
- 11: innerer Kern
- 12: Außenhülse
- 13: Elastomerschicht
- 14: Durchgangsöffnung
- 15: Öffnung
- 16: Ausnehmung
- 17: Absatz
- 18: erstes Begrenzungselement
- 19: zweites Begrenzungselement
- 20: ringförmiger Abschnitt
- 21: ringförmiger Absatz
- 22: Steg
- 23: erster Abschnitt
- 24: zweiter Abschnitt
- 25: dritter Abschnitt
- 26: umgebogener Endbereich
- 27: erster Freiraum
- 28: zweiter Freiraum
- 29: Flachstange
- 30: Einkerbungen

## Patentansprüche

1. Elastische Buchse (10), insbesondere Verbundlenker-Buchse mit einem inneren Kern (11) und einer Außenhülse (12), die konzentrisch zueinander angeordnet sind, und durch eine Elastomerschicht (13) miteinander verbunden sind, wobei zwischen dem inneren Kern (11) und der Außenhülse (12) ein Begrenzungselement (18, 19) angeordnet ist, das die radiale Bewegung des inneren Kerns (11) begrenzt, wobei die Außenhülse (12) einen nach innen gebogenen Endbereich (26) aufweist, wobei das Begrenzungselement (18, 19) in Axialrichtung zu dem Endbereich (26) beabstandet ist, und wobei der Endbereich (26) die axiale Bewegung des inneren Kerns (11) begrenzt **dadurch gekennzeichnet, dass** der innere Kern (11) wenigstens eine in Axialrichtung eingeformte Ausnehmung (16) aufweist, dass das wenigstens eine Begrenzungselement (18, 19) formschlüssig in die Ausnehmung (16) eingebracht ist, und dass der Endbereich (26) als Anschlag für das Begrenzungselement (18, 19) in axialer Richtung dient.

2. Elastische Buchse (10) nach Anspruch 1, **dadurch gekennzeichnet, dass** jeweils ein Begrenzungselement (18, 19) an den gegenüberliegenden Stirnseiten des inneren Kerns (11) angeordnet ist.

3. Elastische Buchse (10) nach einem der Ansprüche 1 oder 2, **dadurch gekennzeichnet, dass** der innere Kern (11) vier von einer Stirnseite zur anderen Stirnseite in Axialrichtung durchgehende Ausnehmungen (16) aufweist, wobei die Ausnehmungen (16) annähernd in einem Winkel von 90° zueinander angeordnet sind.

4. Elastische Buchse (10) nach einem der Ansprüche 1 bis 3, **dadurch gekennzeichnet, dass** das Begrenzungselement (18, 19) vier Stege (22) aufweist, die formschlüssig in die Ausnehmung (16) des inneren Kerns (11) einführbar sind.

5. Elastische Buchse (10) nach einem der Ansprüche 1 bis 4, **dadurch gekennzeichnet, dass** an dem inneren Kern (11) ein Absatz (17) vorgesehen ist, in dem ein korrespondierender ringförmiger Absatz (21) des Begrenzungselements (18, 19) eingreift.

6. Elastische Buchse (10) nach einem der Ansprüche 1 bis 5, **dadurch gekennzeichnet, dass** zwischen dem Begrenzungselement (18, 19) und der Elastomerschicht (13) ein Freiraum (27, 28) in axialer und/oder radialer Richtung vorhanden ist.

7. Elastische Buchse (10) nach einem der Ansprüche 1 bis 6, **dadurch gekennzeichnet, dass** in dem inneren Kern (11) eine Öffnung (14) eingebracht ist, in die eine Flachstange (29) einpressbar ist.

8. Elastische Buchse (10) nach einem der Ansprüche 1 bis 7, **dadurch gekennzeichnet, dass** der innere Kern (11) aus einem abgelängten Strangpressprofil, insbesondere aus Aluminium, hergestellt ist.

9. Elastische Buchse (10) nach einem der Ansprüche 1 bis 8, **dadurch gekennzeichnet, dass** das Begrenzungselement (18, 19) aus Kunststoff hergestellt ist.

10. Verfahren zur Herstellung einer elastischen Buchse (10) nach einem der Ansprüche 1 bis 9, das die folgenden Schritte umfasst:
a. Strangpressen eines inneren Kerns (11) und einer Außenhülse (12);
b. Einbringen einer Elastomerschicht (13) zwischen dem inneren Kern (11) und der Außenhülse (12) und Vulkanisation der Elastomerschicht (13);
c. Anbringen zweier Begrenzungselemente (18, 19) an jeweils einer Stirnseite des inneren Kerns (11), wobei Stege (22) der Begrenzungselemente (18, 19) in Ausnehmungen (16) des inneren Kerns (11) eingeführt werden;
d. Umbiegen der Außenhülse (12) an ihren gegenüberliegenden Enden.

## Claims

1. An elastic bushing (10), in particular a torsion-beam suspension bushing with an inner core (11) and an outer sleeve (12) disposed concentrically to one another and interconnected by an elastomer layer (13), wherein a limiting element (18, 19) limiting the radial movement of the inner core (11) is disposed between the inner core (11) and the outer sleeve (12), wherein the outer sleeve (12) has an inwardly bent end region (26), wherein the limiting element (18, 19) is spaced in the axial direction from the end region (26), and wherein the end region (26) limits the axial movement of the inner core (11), **characterised in that** the inner core (11) comprises at least one recess (16) moulded in the axial direction, that the at least one limiting element (18, 19) is positively inserted into the recess (16), and that the end region (26) serves as a stop for the limiting element (18, 19) in the axial direction.

2. The elastic bushing (10) according to claim 1, **characterised in that** one limiting element (18, 19), respectively, is disposed on the opposite end faces of the inner core (11).

3. The elastic bushing (10) according to any one of the claims 1 or 2, **characterised in that** the inner core (11) comprises four recesses (16) that are continuous from one end face in the axial direction to the other end face, the recesses (16) being disposed approximately at an angle of 90° relative to one another.

4. The elastic bushing (10) according to any one of the claims 1 or 3, **characterised in that** the limiting element (18, 19) comprises four ribs (22) that can be positively introduced into the recess (16) of the inner core (11).

5. The elastic bushing (10) according to any one of the claims 1 or 4, **characterised in that** a step (17), with which a corresponding annular step (21) of the limiting element (18, 19) engages, is provided on the inner core (11).

6. The elastic bushing (10) according to any one of the claims 1 or 5, **characterised in that** a clear space (27, 28) is provided between the limiting element (18, 19) and the elastomer layer (13) in the axial and/or radial direction.

7. The elastic bushing (10) according to any one of the claims 1 or 6, **characterised in that** an opening (14), into which a flat rod (29) can be pressed, is inserted into the inner core (11).

8. The elastic bushing (10) according to any one of the claims 1 or 7, **characterised in that** the inner core (11) is made from a cut extruded profile, in particular consisting of aluminium.

9. The elastic bushing (10) according to any one of the claims 1 or 8, **characterised in that** the limiting element (18, 19) is made from plastic.

10. Method for producing an elastic bushing (10) according to any one of the claims 1 to 9, comprising the following steps:
a. extruding an inner core (11) and an outer sleeve (12);
b. inserting an elastomer layer (13) between the inner core (11) and the outer sleeve (12) and vulcanisation of the elastomer layer (13);
c. attaching two limiting elements (18, 19) to one end face, respectively, of the inner core (11), wherein ribs (22) of the limiting elements (18, 19) are introduced into recesses (16) of the inner core (11);
d. bending around the outer sleeve (12) at its opposite ends.

## Revendications

1. Manchon élastique (10), en particulier manchon pour bras de direction composite comprenant un noyau intérieur (11) et une douille extérieure (12) qui sont agencés concentriquement l'un à l'autre et sont reliés l'un à l'autre par une couche en élastomère (13), dans lequel un élément de limitation (18, 19) est agencé entre le noyau intérieur (11) et la douille extérieure (12), élément qui limite le mouvement radial du noyau intérieur (11), dans lequel la douille extérieure (12) comporte une zone terminale (26) cintrée vers l'intérieur, dans lequel l'élément de limitation (18, 19) est écarté en direction axiale par rapport à la zone terminale (26), et dans lequel la zone terminale (26) limite le déplacement axial du noyau intérieur (11), **caractérisé en ce que** le noyau intérieur (11) comporte au moins un évidement (16) ménagé en direction axiale, **en ce que** ledit au moins un élément de limitation (18, 19) est introduit en coopération de formes dans l'évidement (16), et **en ce que** la zone terminale (26) sert de butée pour l'élément de limitation (18, 19) en direction axiale.

2. Manchon élastique (10) selon la revendication 1, **caractérisé en ce qu'**un élément de limitation (18, 19) respectif est agencé au niveau des faces frontales opposées du noyau intérieur (11).

3. Manchon élastique (10) selon l'une des revendications 1 ou 2, **caractérisé en ce que** le noyau intérieur (11) comporte quatre évidements (16) traversants en direction axiale depuis une face frontale jusqu'à l'autre face frontale, et les évidements (16) sont agencés approximativement à un angle de 90° les uns par rapport aux autres.

4. Manchon élastique (10) selon l'une des revendications 1 à 3, **caractérisé en ce que** l'élément de limitation (18, 19) comprend quatre barrettes (22), qui peuvent être introduites en coopération de formes dans l'évidement (16) du noyau intérieur (11).

5. Manchon élastique (10) selon l'une des revendications 1 à 4, **caractérisé en ce qu'**il est prévu un talon (17) sur le noyau intérieur (11), dans lequel s'engage un talon correspondant (21) de forme annulaire de l'élément de limitation (18, 19).

6. Manchon élastique (10) selon l'une des revendications 1 à 5, **caractérisé en ce qu'**il existe un espace libre (27, 28) en direction axiale et/ou en direction radiale entre l'élément de limitation (18, 19) et la couche en élastomère (13).

7. Manchon élastique (10) selon l'une des revendications 1 à 6, **caractérisé en ce qu'**une ouverture (14) est ménagée dans le noyau intérieur (11), dans laquelle un barreau aplati (29) peut être engagé à la presse.

8. Manchon élastique (10) selon l'une des revendications 1 à 7, **caractérisé en ce que** le noyau intérieur (11) est fabriqué en un profilé extrudé découpé à longueur, en particulier en aluminium.

9. Manchon élastique (10) selon l'une des revendications 1 à 8, **caractérisé en ce que** l'élément de limitation (18, 19) est fabriqué en matière plastique.

10. Procédé pour la fabrication d'un manchon élastique (10) selon l'une des revendications 1 à 9, qui comprend les étapes suivantes :
a) extrusion d'un noyau intérieur (11) et d'une douille extérieure (12) ;
b) introduction d'une couche en élastomère (13) entre le noyau intérieur (11) et la douille extérieure (12) et vulcanisation de la couche en élastomère (13) ;
c) montage de deux éléments de limitation (18, 19) sur une face frontale respective du noyau intérieur (11), de sorte que des barrettes (22) des éléments de limitation (18, 39) sont introduites dans des évidements (16) du noyau intérieur (11) ;
d) rabattement de la douille extérieure (12) à ses extrémités opposées.
